# EUROPEAN PATENT APPLICATION

(11) **EP 4 840 755 A1**
(43) Date of publication of application: **18.11.2026**
(21) Application number: 26172234.2
(22) Date of filing: 14.04.2026
(51) Int. Cl.: B64C 1/14

(54) **SYSTEMS AND METHODS COMPRISING A MEMBER AND AN ENGAGEMENT COMPONENT**

(30) Priority: 15.05.2025 US 202519209599
(71) Applicant: The Boeing Company, Arlington, VA 22202 (US)
(72) Inventor: Mortland, Michael T., Arlington, 22202 (US)
(74) Representative: Witte, Weller & Partner Patentanwälte mbB

(57) **Abstract**

A system comprises a first component and a second component. The first component comprises an aperture and a member. The aperture comprises a first side and a second side. A member is arranged on the second side of the aperture and the member comprises a member portion. The second component is pivotably connected to the first side of the aperture and configured to engage the second side of the aperture. The second component comprises an engagement component and the engagement component is arranged protruding from the second component. The engagement component comprises an engagement surface arranged at an engagement surface angle relative to second component. The engagement surface is configured to engage the member portion. The second component is configured to deform as the engagement surface engages the member portion. A method includes deforming a second component of the system described above.

## Description

### FIELD

The present disclosure relates to systems and methods comprising members and engagement components.

### BACKGROUND

Components that engage together sometimes do not maintain the same size and/or shape. For example, doors of aircraft can be difficult to engage with the aperture for the door. A shape and/or size of a door can be different from the shape and/or size of the aperture for the door due to factors such as loading of weight, size of the door, temperature, and materials of the door and aircraft. For example, loading an aircraft deforms a body and door aperture of the aircraft and therefore, a door may not align with the door aperture. In another example, a curvature of a door may decrease when the door is not engaged with the aperture, and thus the door may be too large for the aperture when the door is reengaged with the aperture. In other examples, a door may be too large for the aperture on one side and too small for the aperture on the other side. Therefore, there is a need to deform a second component when the second component is engaging a first component to align the second component with the first component.

### SUMMARY

Systems and methods are disclosed. In some examples, a system comprises a first component and a second component. In some examples, the first component comprises an aperture and a member. In some examples, the aperture comprises a first side and a second side. In some examples, a member is arranged on the second side of the aperture and the member comprises a member portion.

In some examples, the second component is pivotably connected to the first side of the aperture and configured to engage the second side of the aperture. In some examples, the second component comprises an engagement component and the engagement component is arranged protruding from the second component. In some examples, the engagement component comprises an engagement surface arranged at an engagement surface angle relative to second component. In some examples, the engagement surface is configured to engage the member portion. In some examples, the second component is configured to deform as the engagement surface engages the member portion.

In some examples, a method includes deforming a second component, wherein the second component engages a first component.

In some examples of the method, the first component comprises an aperture and a member. In some examples, the aperture comprises a first side and a second side. In some examples, the member is arranged on the second side of the aperture, and the member comprises a member portion.

In some examples of the method, the second component is pivotably connected to the first side of the aperture and the second component engages the second side of the aperture. In some examples, the second component comprises an engagement component arranged protruding from the second component. In some examples, the engagement component engages the member portion and the engagement component comprises an engagement surface arranged at an engagement surface angle relative to the second component. In some examples, the second component is deformed as the engagement surface engages the member portion.

Further, there is disclosed a system comprising a first component comprising: an aperture comprising a first side and a second side, a member arranged on the second side of the aperture, the member comprising a member portion; and a second component pivotably connected to the first side of the aperture, the second component configured to engage the second side of the aperture, the second component comprising: an engagement component arranged protruding from the second component and configured to engage the member portion, wherein the engagement component comprises an engagement surface arranged at an engagement surface angle relative to the second component, and wherein the second component is configured to deform as the engagement surface engages the member portion.

Preferably, the first component is a fuselage portion of an aircraft.

Preferably, the first component comprises an exterior, an interior, and an interior surface extending from the aperture into the interior, and wherein the member is arranged on the interior surface.

Preferably, the member comprises a member body, wherein the member body extends transverse relative to an interior surface of the first component, and wherein the member portion extends transverse relative to the member body.

Preferably, the member portion extends approximately parallel with an axis of the second side of the aperture.

Preferably, the member portion comprises a member surface, wherein the member surface is a circumferential surface of the member portion, and wherein the member surface operatively engages the engagement surface.

Preferably, the member portion comprises one or more bearings, wherein a member surface is a circumferential surface of the bearing, and wherein the member surface is configured to engage the engagement surface.

Preferably, the member portion is configured as a pin.

Preferably, the second component is configured as a door.

Preferably, the engagement surface is configured to engage the member portion along a proximal side, wherein the proximal side of the member portion is nearest a/the interior surface of the first component, in particular wherein the engagement surface is configured to apply tension force to the second component.

Preferably, the engagement component is configured to engage a/the proximal side of the member portion and apply tension force to the second component, wherein the proximal side of the member portion is nearest a/the interior surface of the first component.

Preferably, the engagement component is configured as a hook, wherein the member portion slides or rolls along an interior of the hook.

Preferably, the engagement surface is configured to engage a distal side of the member portion and apply compression force to the second component.

Preferably, the engagement component is configured as a ramp, wherein the member portion is configured to slide or roll along the ramp.

Preferably, the engagement surface is a first engagement surface, wherein the engagement component comprises a second engagement surface, wherein the second engagement surface is positioned on an opposite side of a receiving space from the first engagement surface, and wherein the engagement component is configured to engage the member portion such that the member portion is received within the receiving space.

Preferably, the second component is curved, wherein deformation of the second component changes the curvature of the second component.

Preferably, deformation of the second component changes a distance between the first side of the aperture and the engagement component.

Preferably, a first end of the second component is operably rotatably connected to the first side of the aperture, wherein a second end of the second component is configured to engage the second side of the aperture, and wherein deformation of the second component changes a distance between the first end and the second end.

Preferably, a/the first end of the second component is connected to the first side of the aperture, wherein a/the second end of the second component is connected to the second side of the aperture, and wherein deformation of the second component changes a/the distance between the first end and the second end.

Preferably, deformation of the second component aligns a/the second end of the second component with the second side of the aperture.

Further, there is disclosed a method of deforming a second component of the system.

Preferably, the method further comprises engaging a/the second end of the second component with the second side of the aperture of the first component.

Preferably, the method further comprises engaging the engagement surface and the member portion.

Preferably, the deforming comprises compressing the second component or elongating the second component.

Preferably, the deforming comprises increasing or decreasing a distance between a/the first end and a/the second end of the second component.

Preferably, the second component is curved, wherein the deforming of the second component increases or decreases a curvature of the second component.

Further, there is disclosed method comprising: deforming a second component, wherein the second component engages a first component, wherein the first component comprises: an aperture comprising a first side and a second side, a member arranged on the second side of the aperture, the member comprising a member portion; and wherein the second component is pivotably connected to the first side of the aperture, wherein the second component engages the second side of the aperture, and wherein the second component comprises: an engagement component arranged protruding from the second component and which engages the member portion, wherein the engagement component comprises an engagement surface arranged at an engagement surface angle relative to the second component, and wherein the second component is deformed as the engagement surface engages the member portion.

Preferably, the method further comprises engaging a second end of the second component with the second side of the aperture of the first component.

Preferably, the method further comprises engaging the engagement component and the member portion.

Preferably, the deforming comprises compressing the second component or elongating the second component.

Preferably, the deforming comprises increasing or decreasing a distance between a/the first end and a/the second end of the second component.

Preferably, the second component is curved, wherein the deforming of the second component increases or decreases a curvature of the second component.

Further, there is disclosed the use of the system to engage the second component with the aperture.

### BRIEF DESCRIPTION OF THE DRAWINGS

Fig. 1 is a schematic diagram representing a system comprising a first component and a second component.
Fig. 2 is a diagram representing an example of a second component.
Fig. 3 is a diagram representing a further example of a second component at states of deformation.
Fig. 4 is a perspective view of an example of a member.
Fig. 5 is a perspective view of an example of an engagement component.
Fig. 6 is a perspective view of a further example of an engagement component.
Fig. 7 is a perspective view of a still further example of an engagement component.
Fig. 8 is a perspective view of an example of a second component.
Fig. 9 is a perspective view of an example of a first component.
Fig. 10 is a perspective view of another angle of the first component of Fig. 9.
Fig. 11 is a perspective view of an example aircraft.
Fig. 12 is a flowchart schematically representing methods deforming a second component.

### DESCRIPTION

Systems and methods comprising members and engagement components are disclosed. Generally, in the figures, elements that are likely to be included in a given example are illustrated in solid lines, while elements that are optional to a given example are illustrated in broken lines. However, elements that are illustrated in solid lines are not essential to all examples of the present disclosure, and an element shown in solid lines may be omitted from a particular example without departing from the scope of the present disclosure.

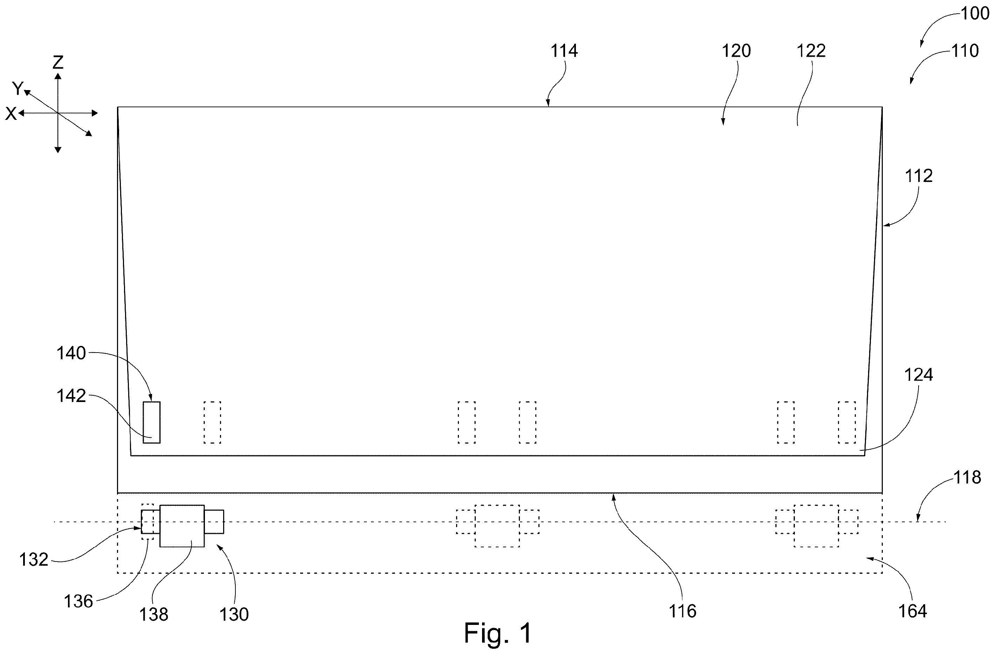

As schematically illustrated in Fig. 1, a system 100 comprises a first component 110 and a second component 120. First component 110 comprises an aperture 112 and a member 130. Aperture 112 comprises a first side 114 and a second side 116. Member 130 is arranged on second side 116 of aperture 112 and member 130 comprises a member portion 132.

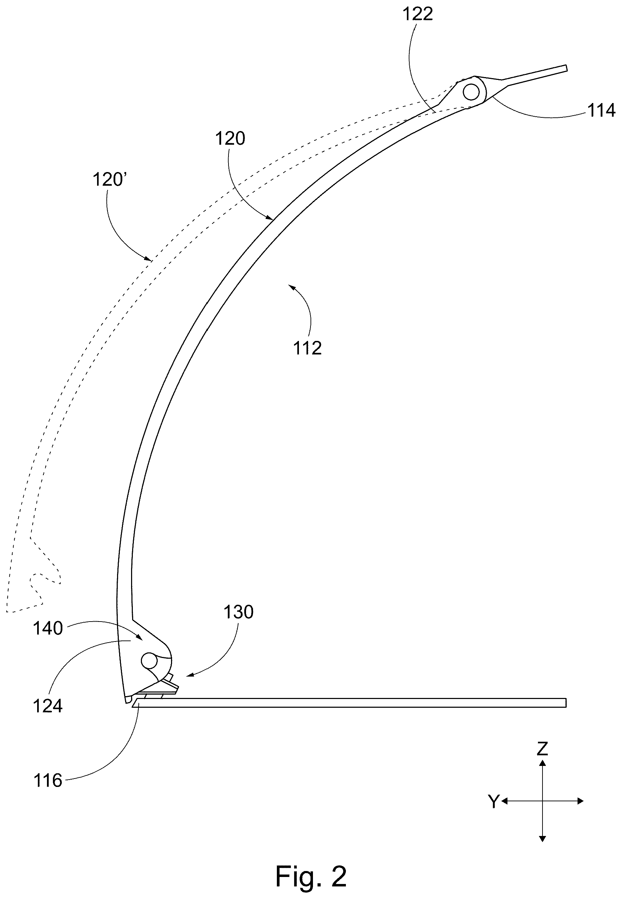

Second component 120 is pivotably connected to first side 114 of aperture 112 and configured to engage second side 116 of aperture 112 of first component 110. Fig. 2 depicts second component 120 in a first position engaged with second side 116 of aperture 112 and a second position, or open position, not engaged with first component 110. Second component 120 comprises an engagement component 140 and engagement component 140 is arranged protruding from second component 120. Engagement component 140 comprises an engagement surface 142 arranged at an engagement surface angle 148 relative to second component 120. Engagement surface 142 is configured to engage member portion 132. Second component 120 is configured to deform as engagement surface 142 engages member portion 132.

Fig. 1 further schematically depicts second component 120 in an open position. Fig. 2 depicts a further example of second component 120 engaged with first component 110 and second component 120' in an open position. Fig. 1 further schematically depicts member 130 arranged on interior surface 164 of first component 110, which extends from second side 116 of aperture 112. Fig. 1 further schematically depicts engagement component 140 arranged on second component 120. Examples of engagement component 140 engage with member 130 and deform second component 120, as discussed further below.

As discussed above, components can be deformed when engaging other components. In some examples, second component 120 is deformed when engaging first component 110. In some examples, second component 120 is too large or too small for an aperture 112 of first component 110 and the second component is deformed to align with the aperture.

In a more specific example, second component 120 is a door and first component 110 is a fuselage of an aircraft with an aperture 112 for the door. The size and/or shape of the door can be different from the shape of the aperture for the door due to factors such as the size of the door, temperature, and materials of the door and aircraft. For example, when the door is not engaged with the aperture, the curvature of the door may decrease and thus the door would be slightly too large for the aperture. In other examples, the door may be too large for the aperture on one side and too small for the aperture on the other side.

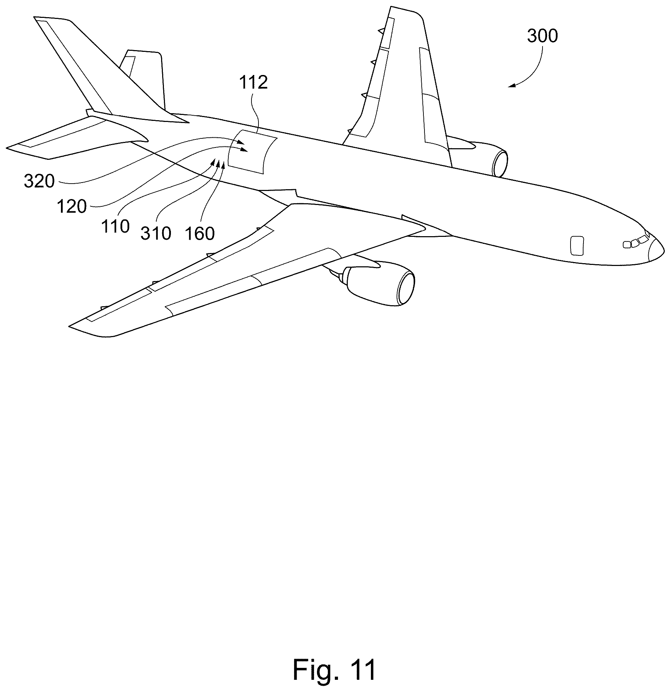

Fig. 11 depicts an example of first component 110 configured as a fuselage portion 310 of an aircraft 300. Fig. 11 also depicts an example of second component 120 configured as a door 320. Door 320 engages fuselage portion 310 of aircraft 300, and door 320 deforms as engagement component 140 engages member portion 132. In this way, door 320 is deformed to fit into aperture 112 of fuselage portion 310 of aircraft 300.

Examples of deformation of second component 120 occur due to member 130 and engagement component 140 engaging with each other. Member 130 is arranged on first component 110, which in some examples is a surface extending from a door aperture, and engagement component 140 is arranged on second component 120 and shaped to engage member 130. Thus, when engagement component 140 of second component 120 engages member 130 of first component 110, second component 120 will be deformed by the aligning of engagement component 140 and member 130, if the second component 120 is not already aligned.

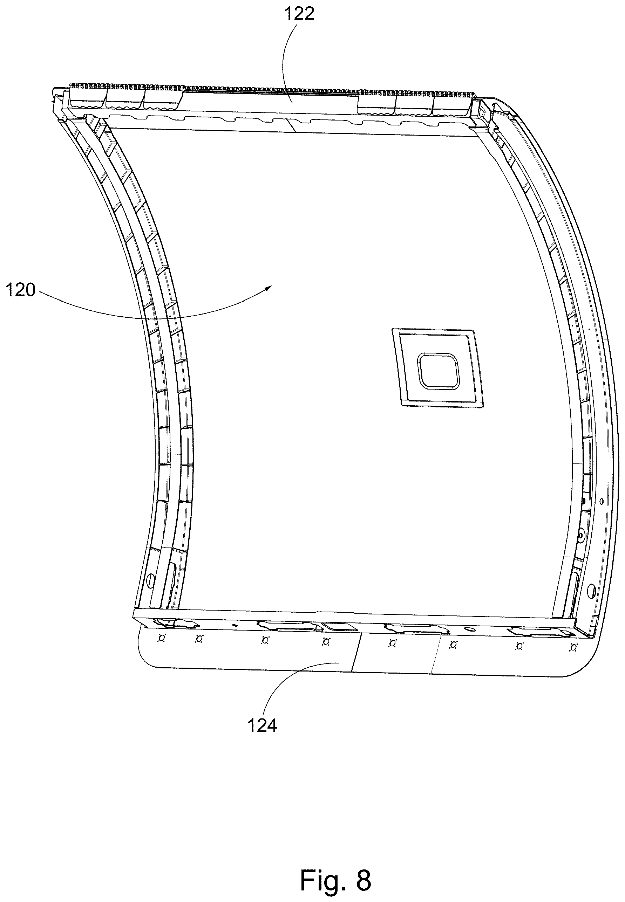

Turning now to Figs. 2-11, illustrative non-exclusive examples of systems 100 and corresponding components are illustrated. Where appropriate, the reference numerals from the schematic illustrations of Fig. 1 are used to designate corresponding parts of the examples of Figs. 2-11; however, the examples of Figs. 2-11 are non-exclusive and do not limit the systems 100 and corresponding components to the illustrated embodiments of Figs. 2-11. That is, systems 100 are not limited to the specific embodiments of Figs. 2-11, and systems 100 and corresponding components may incorporate any number of the various aspects, configurations, characteristics, properties, etc. of systems 100 and corresponding components that are illustrated in and discussed with reference to the schematic representations of Fig. 1 and/or the embodiments of Figs. 2-11, as well as variations thereof, without requiring the inclusion of all such aspects, configurations, characteristics, properties, etc. For the purpose of brevity, each previously discussed component, part, portion, aspect, region, etc. or variants thereof may not be discussed, illustrated, and/or labeled again with respect to the examples of Figs. 2-11; however, it is within the scope of the present disclosure that the previously discussed features, variants, etc. may be utilized with the examples of Figs. 2-11.

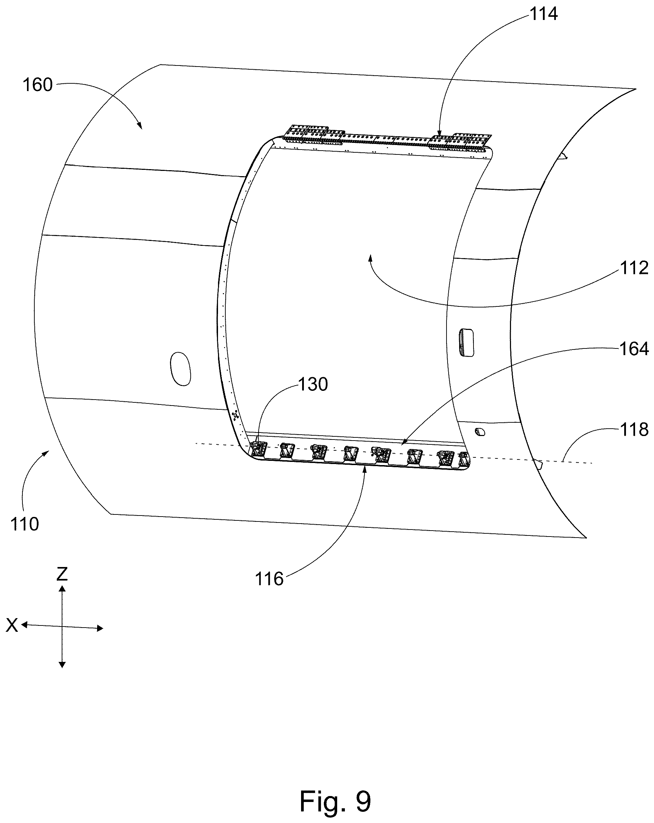

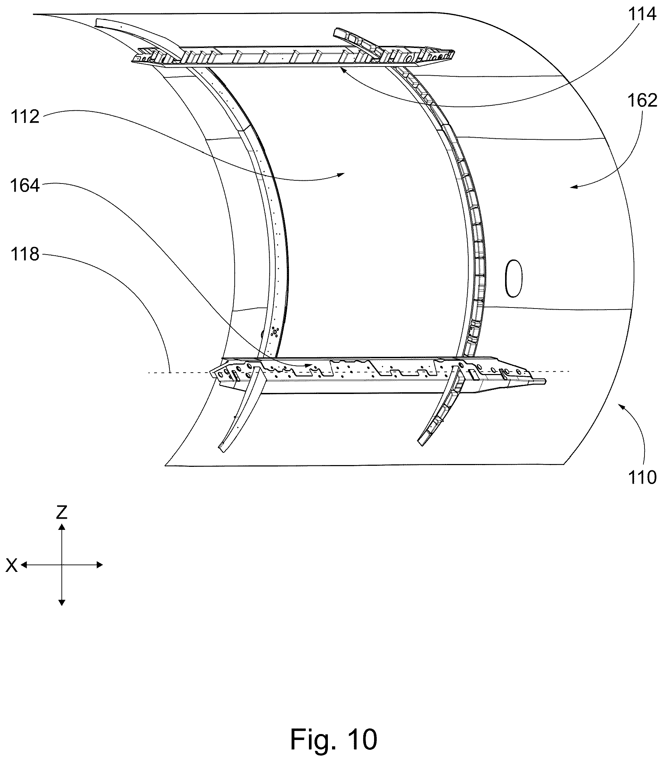

Figs. 9 and 10 depict an example of first component 110. In the example of Figs. 9 and 10, first component 110 comprises an exterior 160, an interior 162, and an interior surface 164 which extends from aperture 112 into interior 162. Examples of member 130 are arranged on interior surface 164. Fig. 11 depicts an example of first component 110 configured a fuselage portion 310 of an aircraft 300. In this example, exterior 160 is the exterior of aircraft 300 and interior 162 is an interior of aircraft 300. Further in this example, aperture 112 is a door aperture in the aircraft 300 where door 320 is received. Still further in this example, door 320 is deformed to fit within aperture 112 when engagement component 140 engages member 130.

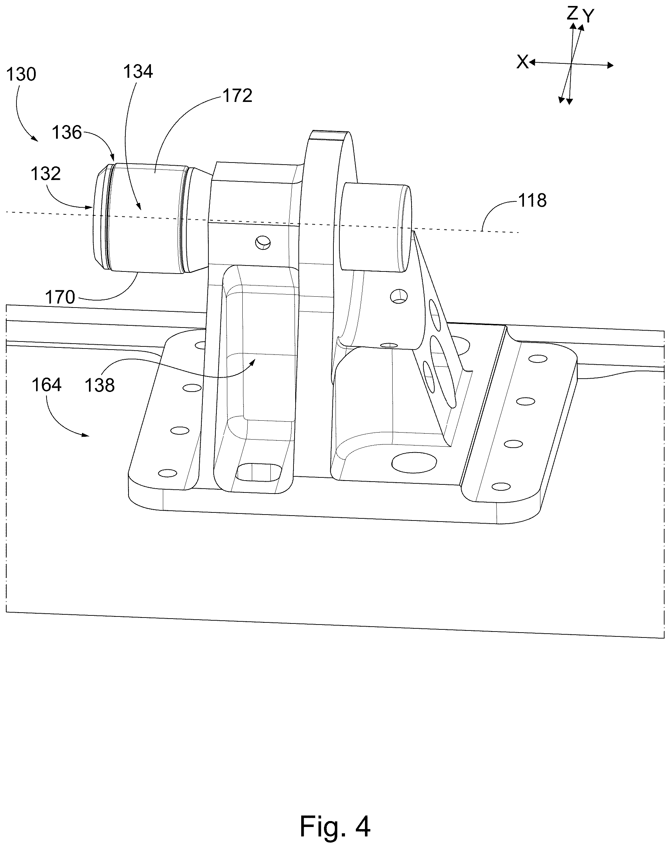

Fig. 4 depicts an example of member 130 comprising a member body 138 and member body 138 extending transverse relative to interior surface 164. As discussed above, examples of interior surface 164 extend inward from an aperture 112 of an aircraft 300. Fig. 4 further depicts member portion 132 extending transverse relative to member body 138. Fig. 4 further depicts member body 138 extending away from interior surface 164. In some examples, member body 138 extends approximately perpendicular to interior surface 164. Similarly, member portion 132 extends outward from member body 138. In some examples, member portion 132 extends approximately perpendicular to member body 138. In other examples, member portion 132 extends approximately parallel with an axis 118 of second side 116 of aperture 112.

As described above, member portion 132 engages engagement surface 142. Some examples of member portion 132 comprises a member surface 134, and member surface 134 is configured to engage engagement surface 142. Examples of member surface 134 are a circumferential surface of member portion 132. Examples of member portion 132 have an approximately cylindrical shape which extends along a longitudinal axis and has a circumferential surface surrounding the longitudinal axis, as shown in Fig. 4. Examples of the circumferential surface of member portion 132 having a varying outer diameter, as depicted in Fig. 4. Other examples of member portion 132 are configured as a pin, and further examples of member surface 134 are a circumferential surface of the pin.

Fig. 4 depicts an example of member portion 132 comprising a bearing 136 and member surface 134 configured as a circumferential surface of bearing 136. Fig. 4 depicts bearing 136 having a greater diameter than the remainder of member portion 132. In the example of Fig. 4, member surface 134 arranged on the bearing 136 is configured to engage engagement surface 142. In still further examples, member portion 132 is configured as a pin comprising a bearing 136. Fig. 4 further depicts member portion 132 having a proximal side 170 and distal side 172, where proximal side 170 is near to interior surface 164 and distal side 172 is on an opposing side of member portion 132 relative to interior surface 164 and proximal side 170. In other words, proximal side 170 of member portion 132 is nearest interior surface 164 and distal side 172 is opposite proximal side 170.

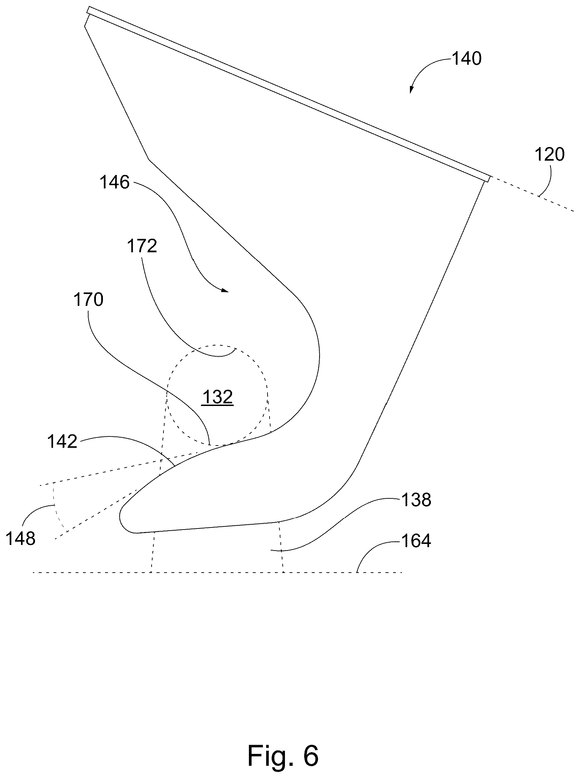

Examples of engagement component 140 engage member portion 132 at different locations. For example, Fig. 6 depicts engagement surface 142 configured to engage member portion 132 along proximal side 170. In the example of Fig. 6, engagement surface 142 is configured to apply tension force to second component 120. In other words, the exemplary engagement component 140 is shaped to extend around member portion 132 to engage proximal side 170 and the engagement applies a tension force to second component 120. In still further words, the engagement of member portion 132 with engagement component 140 pulls engagement component 140, and therefore second component 120, toward the interior surface 164, and therefore second side 116 of aperture 112. Fig. 6 further depicts an example of engagement component 140 configured as a hook, wherein member portion 132 slides or rolls along an interior of hook. In the example of Fig. 6, engagement component 140 engages proximal side 170, which is the bottom side of member portion 132 in Fig. 6, and thus pulls engagement component 140 toward interior surface 164 while applying tension the second component 120.

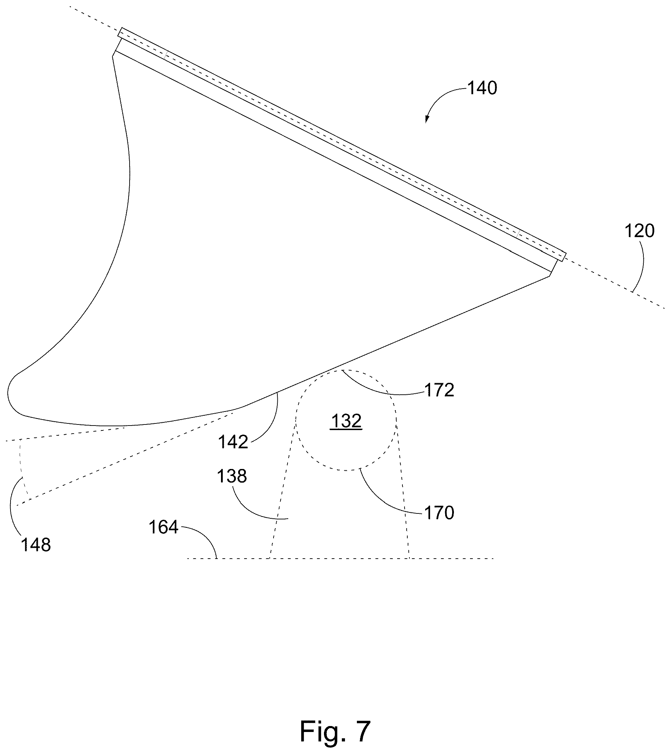

Fig. 7 depicts another example of engagement surface 142 configured to engage a distal side 172 of member portion 132. This example of engagement surface 142 is configured apply compression force to second component 120. In other words, the engagement component 140 engages member portion 132 on distal side 172 and applies a compression to second component 120. In other words, during engagement of engagement component 140 and member portion 132, member 130 applies a force to engagement component 140, and therefore member 130 pushes the engagement component 140 away from interior surface 164 and second side 116 of aperture 112. Fig. 7 further depicts engagement component 140 configured as a ramp, and member portion 132 is configured to slide or roll along the ramp. In the example of Fig. 7, the engagement component 140 engages the distal side 172, which is the top side of member portion 132 in Fig. 7, and thus pushes engagement component 140 away from interior surface 164 and compresses the second component 120.

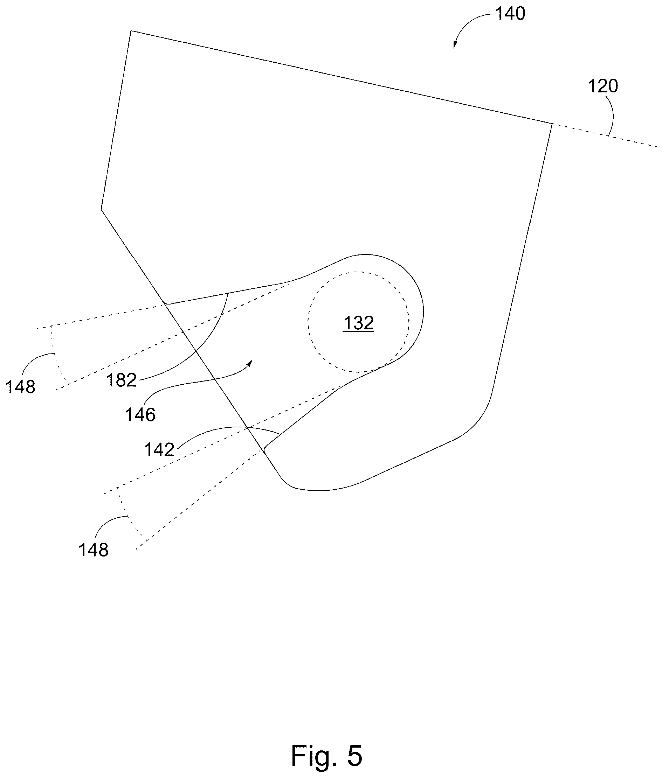

Fig. 5 depicts an example of an engagement component 140 comprising two engagement surfaces: first engagement surface 142 and second engagement surface 182. Second engagement surface 182 is arranged on an opposite side of a receiving space 146 from first engagement surface 142. In the example, engagement component 140 is configured to engage member portion 132 such that member portion 132 is received within receiving space 146. In other words, the example of Fig. 5 depicts first engagement surface 142 and second engagement surface 182 separated by receiving space 146 and member portion 132 is received within receiving space 146. In this way, tension or compression is applied to second component 120 depending on which of first engagement surface 142 and second engagement surface 182 is engaged by member portion 132.

As discussed previously, examples of second component 120 are deformed to align with aperture 112 of first component 110. For example, a door 320 of an aircraft 300 may require deformation via tension or compression to properly engage aperture 112 of fuselage portion 310. Fig. 2 depicts an example of second component 120 being curved. Fig. 2 further depicts engagement of member 130 with engagement component 140 and a second end 124 of second component 120 aligned with second side 116 of aperture 112.

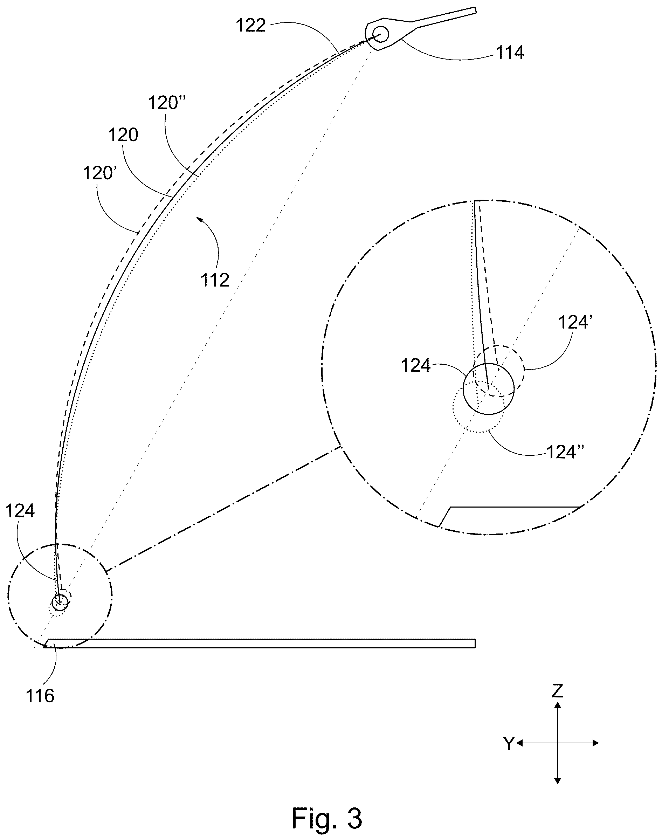

Fig. 3 depicts the curvature of second component 120 changing as second component 120 is deformed. Fig. 3 depicts three examples of second component 120. The first example of second component 120 is undeformed for reference. In the second example, second component 120" is deformed via tension and the curvature of tension deformed second component 120" is less than undeformed second component 120. In the third example, second component 120' is deformed via compression and the curvature of compression deformed second component 120' is greater than the curvatures of both undeformed second component 120 and tension deformed second component 120".

Deformation of second component 120 also changes a distance between a first end 122 and a second end 124 of second component 120. For example, first end 122 of second component 120 is operably rotatably connected to first side 114 of aperture 112, wherein second end 124 of second component 120 is configured to engage second side 116 of aperture 112, and deformation of second component 120 changes a distance between first end 122 and second end 124. In other words, second end 124 of second component 120 can be stretched to a farther distance from first end 122 or compressed to a closer distance to the first end 122, as shown in Fig. 3.

Fig. 3 further depicts that a distance between first end 122 and a second end 124' of compression deformed second component 120' is less than the distance between first end 122 and a second end 124 of undeformed second component 120. Fig. 3 further depicts that a distance between first end 122 and a second end 124" of tension deformed second component 120" is greater than the distance between first end 122 and a second end 124 of undeformed second component 120 and the distance between first end 122 and a second end 124' of compression deformed second component 120'. Similarly, deformation of second component 120 changes a distance between first side 114 of aperture 112 and engagement component 140. Engagement component 140 is arranged adjacent to second end 124 of second component 120, and therefore a change in position of second end 124 produces a corresponding change in position of engagement component 140. In other words, tension deformation increases an end-to-end length second component 120 and reduces a curvature of second component 120 while compression deformation decreases an end-to-end length of second component 120 and increases a curvature of second component 120.

As noted above, examples of deformation of second component 120 align second end 124 of the second component 120 with second side 116 of aperture 112. In this way, if second component 120 is out of alignment with aperture 112, then the deformation of second component 120 brings second component 120 into alignment with aperture 112.

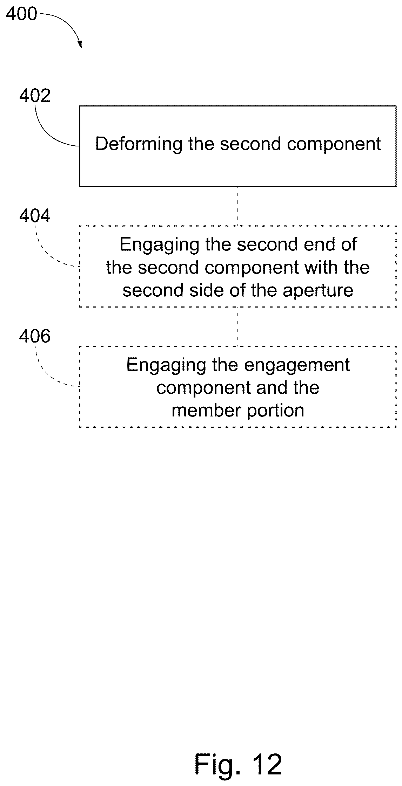

Fig. 12 schematically provides a flowchart that represents illustrative, non-exclusive examples of methods according to the present disclosure. In Fig. 12, some steps are illustrated in dashed boxes indicating that such steps may be optional or may correspond to an optional version of a method according to the present disclosure. That said, not all methods according to the present disclosure are required to include the steps illustrated in solid boxes. The methods and steps illustrated in Fig. 12 are not limiting and other methods and steps are within the scope of the present disclosure, including methods having greater than or fewer than the number of steps illustrated, as understood from the discussions herein.

As seen in Fig. 12, a method 400 includes deforming 402 second component 120 of system 100. The system 100 and second component 120 may be any of the examples described herein. As discussed above, examples of deformation of second component 120 are generated by tension or compression force during engagement of member 130 and engagement component 140. Further examples of deformation of second component 120 are used to align a shape and/or size of second component 120 with the aperture 112 of first component 110.

As discussed above, deformation of second component 120 includes changing an end-to-end length of second component 120 and/or changing a curvature of second component 120. For example, deforming 402 comprises increasing or decreasing a distance between first end 122 and second end 124 second component 120. In another example, second component 120 is curved, and deforming 402 of second component 120 increases or decreases a curvature of second component 120.

Examples of method 400 further include engaging 404 second end 124 of second component 120 with second side 116 of aperture 112 of first component 110. Further examples of method 400 include engaging 406 engagement surface 142 and member portion 132. In this way, examples of deforming second component 120 via engagement of member 130 and engagement component 140 align the second end 124 of second component 120 for engaging second side 116 of aperture 112,

Illustrative, non-exclusive examples of inventive subject matter according to the present disclosure are described in the following enumerated paragraphs:
A. A system (100) comprising
   a first component (110) comprising:
      an aperture (112) comprising a first side (114) and a second side (116),
      a member (130) arranged on the second side (116) of the aperture (112), the member (130) comprising a member portion (132); and
   a second component (120) pivotably connected to the first side (114) of the aperture (112), the second component (120) configured to engage the second side (116) of the aperture (112), the second component (120) comprising:
      an engagement component (140) arranged protruding from the second component (120), wherein the engagement component (140) comprises an engagement surface (142) arranged at an engagement surface angle (148) relative to the second component (120), wherein the engagement component (140), in particular the engagement surface (142), is configured to engage the member portion (132), and wherein the second component (120) is configured to deform as the engagement surface (142) engages the member portion (132).
A1. The system (100) of paragraph A, wherein the first component (110) is a fuselage portion (310) of an aircraft (300).
A2. The system (100) of any of paragraphs A-A1, wherein the first component (110) comprises an exterior (160), an interior (162), and an interior surface (164) extending from the aperture (112) into the interior (162), and wherein the member (130) is arranged on the interior surface (164).
A3. The system (100) of any of paragraphs A-A2, wherein the member (130) comprises a member body (138), wherein the member body (138) extends transverse relative to a/the interior surface (164), and wherein the member portion (132) extends transverse relative to the member body (138).
A4. The system (100) of any of paragraphs A-A3, wherein the member portion (132) extends approximately parallel with an axis (118) of the second side (116) of the aperture (112).
A5. The system (100) of any of paragraphs A-A4, wherein the member portion (132) comprises a member surface (134), wherein the member surface (134) is a circumferential surface of the member portion (132), and wherein the member surface (134) operatively engages the engagement surface (142) or is configured to engage the engagement surface (142).
A6. The system (100) of any of paragraphs A-A5, wherein the member portion (132) comprises one or more bearings (136), wherein a/the member surface (134) is a circumferential surface of the bearing (136), and wherein the member surface (134) is configured to engage the engagement surface (142).
A7. The system (100) of any of paragraphs A-A6, wherein the member portion (132) is configured as a pin.
A8. The system (100) of any of paragraphs A-A7, wherein the second component (120) is configured as a door (320).
A9. The system (100) of any of paragraphs A-A8, wherein the engagement surface (142) is configured to engage the member portion (132) along a proximal side (170), wherein the proximal side (170) of the member portion (132) is nearest a/the interior surface (164) of the first component (110).
A10. The system (100) of paragraph A9, wherein the engagement surface (142) is configured to apply tension force to the second component (120).
A11. The system (100) of any of paragraphs A-A8, wherein the engagement component (140) is configured to engage a/the proximal side (170) of the member portion (132) and apply tension force to the second component (120), wherein the proximal side (170) of the member portion (132) is nearest a/the interior surface (164) of the first component (110).
A12. The system (100) of any of paragraphs A-A11, wherein the engagement component (140) is configured as a hook, and wherein the member portion (132) slides or rolls along an interior of the hook.
A13. The system (100) of any of paragraphs A-A8, wherein the engagement surface (142) is configured to engage a distal side (172) of the member portion (132) and apply compression force to the second component (120).
A14. The system (100) of any of paragraphs A-A8 and A13, wherein the engagement component (140) is configured as a ramp, and wherein the member portion (132) is configured to slide or roll along the ramp.
A15. The system (100) of any of paragraphs A-A8, wherein the engagement surface (142) is a first engagement surface (142), wherein the engagement component (140) comprises a second engagement surface (182), wherein the second engagement surface (182) is arranged on an opposite side of a receiving space (146) from the first engagement surface (142), and wherein the engagement component (140) is configured to engage the member portion (132) such that the member portion (132) is received within the receiving space (146).
A16. The system (100) of any of paragraphs A-A15, wherein the second component (120) is curved, and wherein deformation of the second component (120) changes a curvature of the second component (120).
A17. The system (100) of any of paragraphs A-A16, wherein deformation of the second component (120) changes a distance between the first side (114) of the aperture (112) and the engagement component (140).
A18. The system (100) of any of paragraphs A-A17, wherein a first end (122) of the second component (120) is operably rotatably connected to the first side (114) of the aperture (112), wherein a second end (124) of the second component (120) is configured to engage the second side (116) of the aperture (112), and wherein deformation of the second component (120) changes a distance between the first end (122) and the second end (124).
A19. The system (100) of any of paragraphs A-A17, wherein a first end (122) of the second component (120) is connected to the first side (114) of the aperture (112), wherein a second end (124) of the second component (120) is connected to the second side (116) of the aperture (112), and wherein deformation of the second component (120) changes a distance between the first end (122) and the second end (124).
A20. The system (100) of any of paragraphs A-A19, wherein deformation of the second component (120) aligns a/the second end (124) of the second component (120) with the second side (116) of the aperture (112).
B. A method (400) comprising:
   deforming (402) a second component (120) of the system (100) of any of paragraphs A-20.
B1. The method (400) of paragraph B, further comprising engaging (404) a/the second end (124) of the second component (120) with the second side (116) of the aperture (112) of the first component (110).
B2. The method (400) of any of paragraphs B-B1, further comprising engaging (406) the engagement surface (142) and the member portion (132).
B3. The method (400) of any of paragraphs B-B2, wherein the deforming (402) comprises compressing the second component (120) or elongating the second component (120).
B4. The method (400) of any of paragraphs B-B3, wherein the deforming (402) comprises increasing or decreasing a distance between a/the first end (122) and a/the second end (124) of the second component (120).
B5. The method (400) of any of paragraphs B-B4, wherein the second component (120) is curved, and wherein the deforming (402) of the second component (120) increases or decreases a curvature of the second component (120).
C. A method (400) comprising:
   deforming (402) a second component (120), wherein the second component (120) engages a first component (110), wherein the first component (110) comprises:
      an aperture (112) comprising a first side (114) and a second side (116),
      a member (130) arranged on the second side (116) of the aperture (112), the member (130) comprising a member portion (132); and
   wherein the second component (120) is pivotably connected to the first side (114) of the aperture (112), wherein the second component (120) engages the second side (116) of the aperture (112), and wherein the second component (120) comprises:
      an engagement component (140) arranged protruding from the second component (120) and which engages the member portion (132), wherein the engagement component (140) comprises an engagement surface (142) arranged at an engagement surface angle (148) relative to the second component (120), and wherein the second component (120) is deformed as the engagement surface (142) engages the member portion (132).
C1. The method (400) of paragraph C, further comprising engaging (404) a second end (124) of the second component (120) with the second side (116) of the aperture (112) of the first component (110).
C2. The method (400) of paragraph C or C1, further comprising engaging (406) the engagement component (140) and the member portion (132).
C3. The method (400) of any of paragraphs C-C2, wherein the deforming (402) comprises compressing the second component (120) or elongating the second component (120).
C4. The method (400) of any of paragraphs C-C3, wherein the deforming (402) comprises increasing or decreasing a distance between a/the first end (122) and a/the second end (124) of the second component (120).
C5. The method (400) of any of paragraphs C-C4, wherein the second component (120) is curved, and wherein the deforming (402) of the second component (120) increases or decreases a curvature of the second component (120).
D. The use of the system (100) of any of paragraphs A-A20 to engage the second component (120) with the aperture (112).

As used herein, the terms "adapted" and "configured" mean that the element, component, or other subject matter is designed and/or intended to perform a given function. Thus, the use of the terms "adapted" and "configured" should not be construed to mean that a given element, component, or other subject matter is simply "capable of" performing a given function but that the element, component, and/or other subject matter is specifically selected, created, implemented, utilized, programmed, and/or designed for the purpose of performing the function. It is also within the scope of the present disclosure that elements, components, and/or other recited subject matter that is recited as being adapted to perform a particular function may additionally or alternatively be described as being configured to perform that function, and vice versa. Similarly, subject matter that is recited as being configured to perform a particular function may additionally or alternatively be described as being operative to perform that function.

As used herein, the term "and/or" placed between a first entity and a second entity means one of (1) the first entity, (2) the second entity, and (3) the first entity and the second entity. Multiple entries listed with "and/or" should be construed in the same manner, i.e., "one or more" of the entities so conjoined. Other entities optionally may be present other than the entities specifically identified by the "and/or" clause, whether related or unrelated to those entities specifically identified. Thus, as a nonlimiting example, a reference to "A and/or B," when used in conjunction with open-ended language such as "comprising," may refer, in one example, to A only (optionally including entities other than B); in another example, to B only (optionally including entities other than A); in yet another example, to both A and B (optionally including other entities). These entities may refer to elements, actions, structures, steps, operations, values, and the like.

The various disclosed elements of apparatuses and steps of methods disclosed herein are not required to all apparatuses and methods according to the present disclosure, and the present disclosure includes all novel and non-obvious combinations and subcombinations of the various elements and steps disclosed herein. Moreover, one or more of the various elements and steps disclosed herein may define independent inventive subject matter that is separate and apart from the whole of a disclosed apparatus or method. Accordingly, such inventive subject matter is not required to be associated with the specific apparatuses and methods that are expressly disclosed herein, and such inventive subject matter may find utility in apparatuses and/or methods that are not expressly disclosed herein.

## Claims

1. A system (100) comprising
a first component (110) comprising:
an aperture (112) comprising a first side (114) and a second side (116),
a member (130) arranged on the second side (116) of the aperture (112), the member (130) comprising a member portion (132); and
a second component (120) pivotably connected to the first side (114) of the aperture (112), the second component (120) configured to engage the second side (116) of the aperture (112), the second component (120) comprising:
an engagement component (140) arranged protruding from the second component (120) and configured to engage the member portion (132), wherein the engagement component (140) comprises an engagement surface (142) arranged at an engagement surface angle (148) relative to the second component (120), and wherein the second component (120) is configured to deform as the engagement surface (142) engages the member portion (132).

2. The system (100) of claim 1, wherein the first component (110) comprises an exterior (160), an interior (162), and an interior surface (164) extending from the aperture (112) into the interior (162), and wherein the member (130) is arranged on the interior surface (164).

3. The system (100) of claim 1 or 2, wherein the member (132) comprises a member body (138), wherein the member body (138) extends transverse relative to an interior surface (164) of the first component (110), and wherein the member portion (132) extends transverse relative to the member body (138).

4. The system (100) of any of claims 1-3, wherein the member portion (132) extends approximately parallel with an axis (138) of the second side (116) of the aperture (112).

5. The system (100) of any of claims 1-4, wherein the member portion (132) comprises a member surface (134), wherein the member surface (134) is a circumferential surface of the member portion (132), and wherein the member surface (134) operatively engages the engagement surface (142).

6. The system (100) of any of claims 1-5, wherein the member portion (132) comprises one or more bearings (136), wherein a member surface (134) is a circumferential surface of the bearing (136), and wherein the member surface (134) is configured to engage the engagement surface (142).

7. The system (100) of any of claims 1-6, wherein the engagement surface (142) is a first engagement surface (142), wherein the engagement component (140) comprises a second engagement surface (182), wherein the second engagement surface (281) is positioned on an opposite side of a receiving space (146), and wherein the engagement component (140) is configured to engage the member portion (132) such that the member portion (132) is received within the receiving space (146).

8. The system (100) of any of claims 1-6, wherein the engagement surface (142) is configured to engage the member portion (132) along a proximal side (170), wherein the proximal side (170) of the member portion (132) is nearest an interior surface (164) of the first component (110), in particular wherein the engagement surface (140) is configured to apply tension force to the second component (120).

9. The system (100) of any of claims 1-6, wherein the engagement component (140) is configured to engage a distal side (172) of the member portion (132) and apply compression force to the second component (120).

10. The system (100) of any of claims 1-6 or 9, wherein the engagement component (140) is configured as a ramp, and wherein the member portion (132) is configured to slide or roll along the ramp.

11. The system of any of claims 1-6 or 8, wherein the engagement component (140) is configured as a hook, and wherein the member portion (132) slides or rolls along an interior of the hook.

12. The system (100) of any of claims 1-11, wherein the second component (120) is curved, and wherein deformation of the second component (120) changes a curvature of the second component.

13. The system of any of claims 1-12, wherein deformation of the second component (120) changes a distance between the first side (114) of the aperture (112) and the engagement component (140) and/or aligns a second end (124) of the second component with the second side (116) of the aperture (112).

14. A method (400) comprising:
deforming (402) a second component (120), wherein the second component (120) engages a first component (110), wherein the first component (110) comprises:
an aperture (112) comprising a first side (114) and a second side (116),
a member (130) arranged on the second side (116) of the aperture (112), the member (130) comprising a member portion (132); and
wherein the second component (120) is pivotably connected to the first side (114) of the aperture (112), wherein the second component (120) engages the second side (116) of the aperture (112), and wherein the second component (120) comprises:
an engagement component (140) arranged protruding from the second component (120) and which engages the member portion (132), wherein the engagement component (140) comprises an engagement surface (142) arranged at an engagement surface angle (148) relative to the second component (120), and wherein the second component (120) is deformed as the engagement surface (142) engages the member portion (132).

15. The method of claim 14, further comprising:
engaging a second end of the second component with the second side of the aperture of the first component; and/or
engaging the engagement component and the member portion.
